# FASCICULE DE BREVET EUROPEEN

(11) **EP 2 675 581 B1**
(45) Date de publication et mention de la délivrance du brevet: **17.08.2016**
(21) Numéro de dépôt: 12700707.8
(22) Date de dépôt: 23.01.2012
(51) Int. Cl.: B21D 51/24, B29C 37/00, B29C 53/82, B29C 59/02, B29C 53/60, F16J 12/00, F17C 1/02

(54) **PROCEDE ET DISPOSITIF DE REALISATION DE MANDRIN POUR CAPACITE BOBINEE**
VERFAHREN UND VORRICHTUNG ZUR HERSTELLUNG EINES DORNS FÜR EINEN WICKELKONDENSATOR
METHOD AND DEVICE FOR CREATING A MANDREL FOR A WOUND CAPACITOR

(30) Priorité: 15.02.2011 FR 1151211
(43) Date de publication de la demande: 25.12.2013
(73) Titulaire: Airbus Defence and Space SAS, 78130 Les Mureaux (FR)
(72) Inventeur: RAYMOND, Gérald, F-33160 Saint Medard en Jalles (FR); ROUSSY, Antoine, F-33000 Bordeaux (FR)
(74) Mandataire: Ipside
(86) Numéro de dépôt international: PCT/EP2012/050931
(87) Numéro de publication internationale: WO 2012/110280

(56) Documents cités:
- US-A- 3 340 115
- US-A- 3 489 626

## Description

La présente invention concerne un procédé et un dispositif de réalisation de mandrin pour capacité bobinée.

Une capacité bobinée est par exemple un réservoir destiné à recevoir un gaz ou un liquide qui comporte une paroi réalisée par enroulement filamentaire de fibres telles que des fibres composites liées par une résine.

L'invention concerne plus particulièrement le domaine des réservoirs composites bobinés haute performance destinés au stockage sous pression de fluides en particulier pour applications spatiales, et comme par exemple le stockage sous pression de fluides cryogéniques.

On entend par réservoirs hautes performances, des réservoirs optimisés en termes de masse, tels ceux utilisés dans les industries des transports en général, le transport spatial en particulier.

La présente invention s'applique notamment à la fabrication de produits en matériau composite pour lesquels on a besoin d'outillages support et plus particulièrement pour les pièces de grandes dimensions pour lesquelles le poids de l'outillage devient problématique.

L'enroulement filamentaire est une technologie bien connue de fabrication de pièces creuses en matériaux composites.

Il s'agit essentiellement de déposer des fibres continues imprégnées de résine sur un outillage appelé mandrin. Après polymérisation, le mandrin est en général éliminé, sauf quand on lui fait par exemple jouer le rôle de paroi d'étanchéité interne( liner selon la terminologie anglo-saxonne).

On fabrique ainsi des tubes, des réservoirs, voire des pièces de forme plus complexe.

Dans le domaine des tubes, le document US 3 489 626 A décrit la réalisation de tubes ou réservoirs composites réalisés avec une composition de résine polymère, une charge de remplissage et des fibres de renfort et fabriqués sur un mandrin.

La technologie d'enroulement filamentaire existe en plusieurs variantes, selon que les fibres sont imprégnées au préalable (pré imprégné) ou imprégnées en cours de bobinage (bobinage dit "wet" selon la terminologie anglo-saxonne), et selon que les résines sont thermodurcissables ou thermoplastiques. Le placement de fibre peut être considéré comme une extension de l'enroulement filamentaire.

Un cas particulier d'utilisation de ces réservoirs de grandes dimensions est celui de l'enveloppe des moteurs de propulsion à poudre. Les étages propulsifs utilisant un propergol solide sont une application particulière de la technologie d'enroulement filamentaire : ils sont constitués d'un réservoir qui contient le propergol solide.

Ce réservoir est naturellement de grande taille, plusieurs mètres de diamètre et encore plus de mètres de longueur et doit résister à la grande pression générée par la combustion du propergol, pression que le concepteur cherche à rendre la plus grande possible pour augmenter la poussée. Par ailleurs la performance globale du lanceur demande évidemment que la masse de ce réservoir soit la plus faible possible.

C'est pourquoi les concepteurs d'étage propulsif à propergol solide se sont orientés vers l'utilisation de fibres, verre, kevlar puis carbone ou autres fibres de haute résistance de manière à profiter de la résistance spécifique élevée, c'est à dire le rapport entre la résistance à la rupture et la masse volumique de ces matériaux.

Conformément au procédé de bobinage, pour fabriquer un corps de propulseur on doit d'abord réaliser un mandrin ayant la forme de la pièce à réaliser.

Ce mandrin est ensuite éventuellement recouvert d'une peau telle qu'une pellicule de caoutchouc assurant l'étanchéité et l'isolation thermique des fibres.

Ensuite on bobine soit le fil, soit un ruban de fils parallèles, après les avoir enduits de résine. L'ensemble est alors polymérisé, en général par cuisson en autoclave, ce qui impose que le mandrin soit capable se supporter la température de polymérisation et les contraintes mécaniques induites par le bobinage et les dilatations différentielles.

Le mandrin peut comporter des réserves pour recevoir un certain nombre de renforts ou pièces métalliques telles que les embases de tuyère et d'allumeur destinés à être implanté dans la pièce finie et restant en place une fois le mandrin retiré.

Après polymérisation pour une résine thermodurcissable ou refroidissement pour une résine thermoplastique, une fois la capacité consolidée, le mandrin est retiré, par destruction ou démontage.

Pour de petites dimensions, le mandrin peut être fabriqué en métal fusible mais pour des capacités de grandes dimensions réaliser le mandrin en métal fusible devient impossible du fait de son poids et de la difficulté à faire fondre une masse de métal importante.

On voit en fait que le mandrin doit être compatible avec de nombreuses exigences :
- exigences géométriques, puisque c'est lui qui définit la forme de la pièce finie, et qui supporte les équipements complémentaires du type embases ou bossages;
- tenue thermique, car il doit être compatible avec des traitements de polymérisation à chaud qui peuvent atteindre 180°C;
- tenue mécanique, puisqu'il doit supporter les tensions de bobinage sans déformation, mais également conserver la forme de la pièce sous son propre poids et pendant la polymérisation;
- comportement physique et notamment dilatation thermique qui doit être compatible avec les matériaux mis en oeuvre;
- masse la plus faible possible, car liée directement à la taille et donc au coût des moyens industriel de fabrication;
- il doit être démontable, ou pouvoir être éliminé en fin de fabrication.

Il existe de nombreuses technologies de mandrin, qu'ils soient solubles, de type plâtre, fusibles, gonflables ou métalliques démontables.

On notera les documents US 3 652 024 et US 4 462 287 qui décrivent des mandrins métalliques démontables, la référence aujourd'hui pour les gros propulseurs à poudre tels ceux du lanceur Européen Véga, le document EP 1 010 513 qui décrit un mandrin en mousse et le document US 4 632 328 qui décrit un mandrin gonflable.

Il est en outre connu d'utiliser comme mandrin un matériau à base de sable et d'alcool polyvinylique, ce dernier étant soluble dans l'eau chaude.

Ces technologies ne sont pas optimisées pour les capacités de grandes dimensions telles que celles pour les gros propulseurs à poudre du fait notamment que:
- les technologies à base de sable ou plâtre utilisent des matériaux de densité élevée, supérieures à 2, qui sont donc très lourds;
- Les technologies gonflables ne fonctionnent pas pour des grandes pièces, car les pressions nécessaires à la tenue à la dépose des fibres sont très élevée, et incompatibles d'un procédé sécurisé de fabrication et,
du fait que pour les mandrins métalliques les inconvénients sont de deux ordres :
Ils sont très chers, car complexes;

Leur cycle d'utilisation est très long, car il y a de nombreuses pièces à démonter et à manipuler, puis à remonter pour un nouvel usage;

Leur géométrie est fixée, ce qui n'est pas favorable pour faire évoluer les pièces en développement, on ne peut lancer en fabrication ces mandrins que lorsque la définition de la pièce à réaliser est figée, ce qui rallonge les temps de développement.

L'invention propose un moyen de réalisation de mandrins en particulier de grandes dimensions qui soient à la fois relativement légers, peu couteux à la réalisation, d'une mise en oeuvre simple, compatibles avec les multiples contraintes afférentes à ce type d'outillage et notamment, précision géométrique, tenue aux efforts de bobinage, compatibilité avec les cycles thermiques ou autres, permettant la réalisation d'ébauches en avance de phase, de façon à pouvoir réduire les cycles de développement des pièces à réaliser.

L'objectif de la présente invention est en particulier de réaliser par moulage un mandrin plein avec un matériau allégé ayant les propriétés du type suivant :
- densité inférieure à 500 kg/m3 typiquement,
- résistance mécanique aux efforts de bobinage notamment résistance à la compression supérieure à 0.3 MPa,
- résistance aux dilatations différentielles lors de la polymérisation, en particulier résistance à la compression typiquement supérieure à 1 MPa;
- résistance thermique aux contraintes de polymérisation et notamment résistance à une température de l'ordre de 160 °C pendant 48 heures;
- possibilité d'une mise au profil définitif juste avant le début des opérations de bobinage.

Cette dernière contrainte impose typiquement une réserve de plusieurs centimètres sur la surface extérieure du mandrin alors que la présence d'une telle épaisseur sur un mandrin démontable métallique rendrait son poids excessif, aussi bien pour les machines à bobiner que pour le démontage.

Pour ce faire la présente invention propose un mandrin de bobinage de fibres réalisé au moins partiellement au moyen d'un béton cellulaire.

Le béton cellulaire est avantageusement réalisé à partir d'un mélange comportant en volume:
- de 15 à 25 % de ciment (cpj32,5),
- de 10 à 20 % de chaux,
- de 0,01 à 0,09 % de poudre d'aluminium,
- de 0,5 à 1,5 % de gypse,
- de 60 à 70 % de sable de quartz siliceux, pour complément à 100%.

La prise du béton est réalisée par addition d'eau au mélange.

1 m3 du mélange ci-dessus auquel on ajoute entre 200 et 300 litre d'eau permet d'obtenir 4 à 6 m3 de béton cellulaire en fonction de la quantité de poudre d'aluminium introduite c'est à dire un bloc composé de l'ordre de 20 % de matière et 80 % d'air (valable pour un bloc en masse volumique de 400 kg/m³).

Avantageusement, le béton cellulaire solidifié présente une masse volumique inférieure à 500kg/m³.

Préférablement, le béton cellulaire solidifié présente une masse volumique de 400kg/m³ +/- 10%.

Selon un premier mode de réalisation, le mandrin est avantageusement réalisé en plusieurs parties de mandrin assemblables.

Les partie assemblables peuvent comporter des tronçons axiaux du mandrin et/ou des secteurs radiaux.

Le mandrin comporte avantageusement un logement de réception d'un axe de rotation du mandrin.

Selon un mode de réalisation alternatif, le mandrin comporte un moulage direct du béton autour d'un axe de rotation du mandrin.

L'axe est préférablement un axe conique permettant un retrait aisé de l'axe.

Selon un mode de réalisation particulier, le mandrin comporte une surface externe striée.

Avantageusement, le mandrin est recouvert d'une peau de réception des fibres bobinées. La peau peut notamment être un élastomère dans le cas d'une enveloppe de propulseur à poudre ou être un enduit de lissage pour d'autres applications.

L'invention concerne en outre un procédé de réalisation d'un outillage de bobinage comportant un mandrin réalisé au moins partiellement avec un béton cellulaire qui comporte une étape de moulage d'un mandrin ou de parties d'un mandrin pourvu d'un logement de réception d'un axe de bobinage.

Préférablement le procédé comporte une étape de fixation du mandrin ou d'assemblage et de fixation des éléments du mandrin sur l'axe de bobinage.

De manière alternative, l'invention concerne un procédé de réalisation d'un outillage de bobinage comportant un mandrin réalisé au moins partiellement avec un béton cellulaire qui comporte une étape de moulage d'une ébauche du mandrin sur un axe de rotation du mandrin.
le procédé de réalisation de l'outillage comporte avantageusement une étape de mise au gabarit du mandrin sur l'axe de bobinage par usinage de la surface externe du mandrin.

Selon un mode de réalisation particulier, le procédé comporte une étape d'usinage de rainures sur la surface externe du mandrin.

Le procédé comporte avantageusement une étape de dépose d'une peau de protection thermique sur la surface externe du mandrin.

Le procédé de l'invention est complété par un procédé de réalisation d'une capacité par une étape de bobinage de fibres sur ledit mandrin disposé sur un axe de bobinage, une étape de retrait de l'axe de bobinage et une étape de retrait du mandrin.

L'étape de retrait du mandrin comporte préférablement une étape d'abrasion ou de grignotage du béton cellulaire constituant le mandrin.

L'étape d'abrasion est avantageusement limitée en sorte de laisser une couche superficielle de béton en contact avec l'intérieur de la capacité, l'étape de retrait du mandrin comportant une étape de retrait de la couche superficielle.

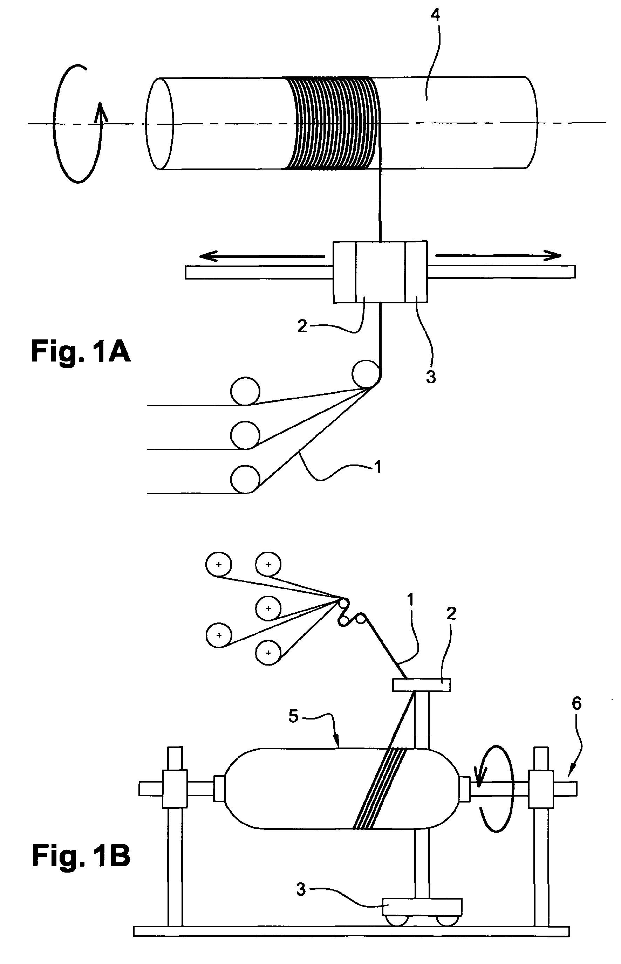

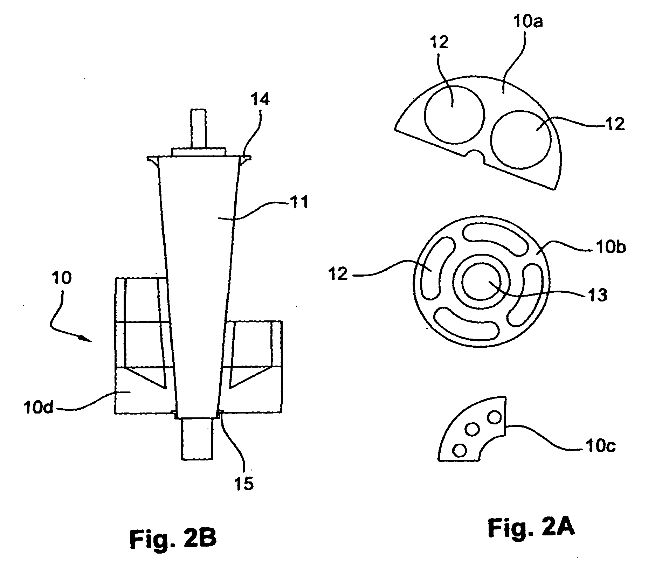

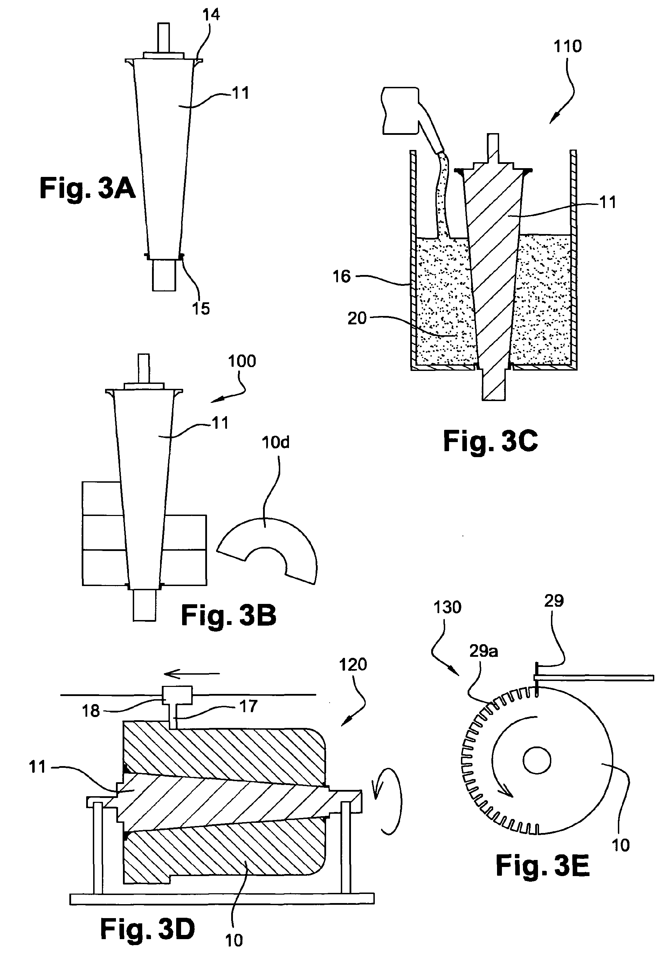

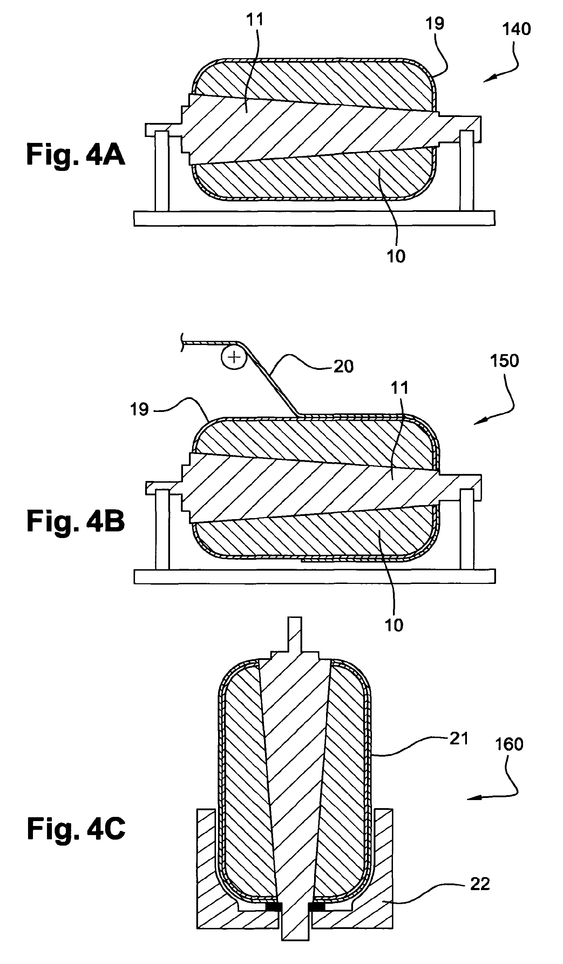

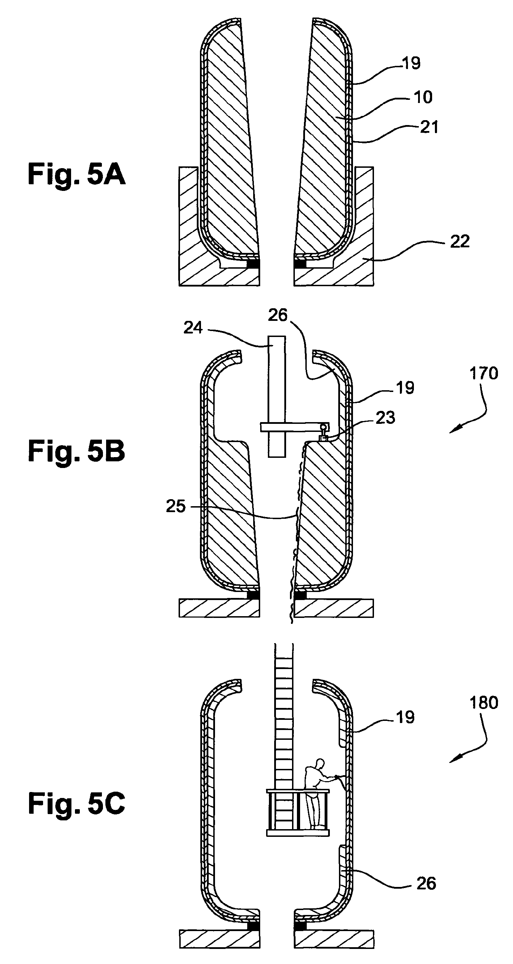

D'autres caractéristiques et avantages de l'invention seront apparents à la lecture de la description qui suit d'un exemple non limitatif de réalisation de l'invention accompagné des dessins qui représentent:
aux figures 1A et 1B: des exemples schématiques de bobinage de fibres sur mandrin;
aux figures 2A et 2B: des vues schématiques d'exemples de parties de mandrin selon l'invention et d'un assemblage de parties de mandrin de l'invention sur un axe;
aux figures 3A à 3E: des vues schématique d'étapes de réalisation d'un outillage de bobinage selon l'invention;
aux figures 4A à 4C: des vues schématiques d'étapes de début de réalisation d'une capacité bobinée selon le procédé de l'invention;
aux figures 5A à 5C: des vues schématiques de la fin de la réalisation d'une capacité bobinée selon le procédé de l'invention.

Les figures 1A et 1B représentent schématiquement deux exemples de techniques connues de bobinage sur mandrin.

La figure 1A correspond à une vue de dessus de la technologie "wet" pour laquelle des fibres 1 passent dans un bac d'imprégnation 2 monté sur un chariot mobile 3 et sont bobinées sur un mandrin en rotation 4.

La figure 1B est une vue de côté d'un dispositif "wet" adapté au bobinage sur une un mandrin en forme de capacité 5 montée sur un axe de rotation 6.

Comme indiqué en préambule, pour les capacités de grandes dimensions on arrive à un poids pour les mandrins qui devient problématique voir rédhibitoire et il est nécessaire d'alléger le mandrin tout en lui conservant une bonne résistance à l'écrasement lors du bobinage et une grande stabilité dimensionnelle au cours de ce bobinage.

Le principe de l'invention est d'utiliser un matériau de type béton cellulaire, tel que utilisé dans l'industrie du bâtiment.

Un exemple de matériau adapté est le béton connu sous la marque Siporex de la société Xella.

Dans le cadre des essais on a déterminé qu'un béton cellulaire adapté à l'invention est réalisé à partir d'un mélange comportant en volume:
- de 15 à 25 % de ciment (cpj32,5),
- de 10 à 20 % de chaux,
- de 0,01 à 0,09 % de poudre d'aluminium,
- de 0,5 à 1,5 % de gypse,
- de 60 à 70 % de sable de quartz siliceux, pour complément à 100%.

La prise du béton est réalisée par addition d'eau au mélange.

1 m3 du mélange ci-dessus auquel on ajoute entre 200 et 300 litre d'eau permet d'obtenir 4 à 6 m3 de béton cellulaire en fonction de la quantité de poudre d'aluminium introduite c'est à dire un bloc composé de l'ordre de 20 % de matière et 80 % d'air, valable pour un bloc en masse volumique de 400 kg/m³.

Le béton est coulé dans des moules correspondant à des parties du mandrin 10a, 10b, 10c qui sont une fois solidifiées assemblées sur un axe 11 selon les figures 2A et 2B.

La figure 2A représente trois exemples possibles de réalisation des parties de mandrin selon l'invention.

L'exemple 10a est un secteur radial en demi disque pourvu de zones creuses 12, l'exemple 10b est un tronçon axial pourvu d'un trou central conique 13 de réception de l'axe 11 de la figure 2B et de zones creuses 12 et l'exemple 10C est un secteur radial en quart de disque.

Le béton cellulaire solidifié présente une masse volumique inférieure à 500kg/m³ et plus généralement une masse volumique de 400kg/m³ +/- 10%. ce qui permet pour des mandrins de dimensions moyennes de réaliser des parties de mandrin pleines.

Du fait de la rigidité du béton cellulaire, il est possible de réaliser des parties de mandrin ajourées comme représenté en figure 2A pour des mandrins de grandes dimensions ce qui réduit la masse de l'outillage sans perdre en précision sur le bobinage et sur les dimensions de la capacité réalisée.

La technologie du béton cellulaire est en effet compatible avec la constitution de mandrins partiellement creux. En effet, au-delà d'une certaine taille, 2 m de diamètre environ, il peut être intéressant de ne pas constituer un mandrin plein main de construire le mandrin en incorporant des vides. Cette technique permet d'envisager, avec 50% de vide, des mandrins compatibles de 3.7 m de diamètre et 13 m de long, pour une masse totale inférieure à 26 T.

La figure 2B représente schématiquement l'assemblage de parties de mandrin sur un axe 11.

L'axe 11 est conique pour faciliter son retrait une fois la capacité bobinée et est équipé des renforts métalliques 14, 15 de la capacité tels qu'embases de tuyère et d'allumeur.

Les parties de mandrin constituées par des blocs préfabriqués sont alors disposés sur le mandrin.

En variante il est possible de mouler le béton en un seul bloc ensuite inséré sur l'axe ou même de mouler le béton directement autour de l'axe ce qui sera fait par exemple pour un mandrin de dimensions moyennes.

Une ébauche est ainsi réalisée, en attente de la définition du profil définitif.

Les étapes de réalisation du mandrin disposé sur l'axe de rotation sont représentées aux figures 3A à 3E.

La figue 3A représente l'axe de rotation 11 équipé des terminaisons 14 et 15. Les figures 3B et 3C représentent respectivement une étape 100 d'assemblage de parties de mandrin assemblables sur l'axe de rotation et une étape 110 de moulage direct d'une ébauche du mandrin sur l'axe de rotation.

Pour la figure 3B, les parties de mandrin 10d sont éventuellement collées sur l'axe pour former l'ébauche du mandrin et pour la figure 3C, le béton 20 est coulé dans un moule 16 réalisant une forme d'ébauche du mandrin.

Une fois la forme définitive du mandrin connue, le mandrin est usiné à dimension pour réaliser la surface intérieure de la capacité.

La figure 3D correspond à une telle étape 120 de mise au gabarit du mandrin sur l'axe de bobinage par usinage de la surface externe du mandrin.

Cet usinage est réalisé selon l'exemple par un outil de coupe 17 monté sur un chariot coulissant 18 avec le mandrin 10 mis en rotation sur l'axe 11.

En effet, le béton cellulaire s'usine facilement avec un outil de coupe tel qu'une fraise.

Cette mise au gabarit postérieure au montage de l'ébauche du mandrin sur l'axe 11 a pour avantage de permettre des modifications du mandrin en cours d'étude et de pouvoir réaliser plusieurs mandrins différents à partir de la même ébauche.

Une fois l'usinage au gabarit réalisé, il est possible de réaliser des stries ou rainures sur la surface extérieure du mandrin selon une étape 130 d'usinage de rainures 29a sur la surface externe du mandrin comme représenté en figure 3E en utilisant un outil tel qu'une scie circulaire 29 qui se déplace parallèlement à l'axe du mandrin, le mandrin étant tourné entre chaque passe de la scie.

La figure 4A correspond à une étape 140 de dépose d'une peau de protection thermique 19 sur la surface externe du mandrin.

Cette peau de protection thermique est destinée à réaliser la surface intérieure de la capacité et restera une fois le mandrin retiré.

La figure 4B correspond à l'étape 150 de bobinage de fibres 20 sur le mandrin 10 disposé sur son axe de bobinage 11 pour réaliser le corps de la capacité.

Le béton cellulaire possède une résistance mécanique de 3MPa typiquement pour une masse volumique de 400 kg/m³.

Il résistera donc sans problème aux efforts de bobinage et de dilatation différentielle. Le béton cellulaire est d'ailleurs bien placé sous cet aspect car sa dilatation propre est intermédiaire entre celle de la fibre et celle de l'acier. Il se dilatera donc moins qu'un mandrin métallique.

Une fois le corps 21 de la capacité polymérisé, l'axe central est retiré et le béton cellulaire évacué.

Selon la figure 4C, correspondant à une étape 160 de retrait de l'axe, la capacité est posée verticalement sur un support 22, la pointe de l'axe conique étant tournée vers le bas de sorte que l'axe puisse être retiré par le haut.

Une fois l'axe retiré, le mandrin 10 recouvert de la capacité constituée par la peau 19 et le bobinage 21 est maintenu vertical comme représenté en figure 5A, l'étape suivante étant une étape 170 de retrait du mandrin schématisée en figure 5B.

Pour retirer le mandrin il est possible comme représenté en figure 5B de le grignoter avec une fraise 23 montée sur un support articulé 24, les résidus de béton 25 s'écoulant par le trou formé par le retrait de l'axe 11.

Pour ne pas détériorer la peau 19 l'usinage du béton est réalisé jusqu'à quelques centimètres de la peau extérieure au mandrin et intérieure à la capacité et on laisse une couche superficielle de béton 26 en contact avec la peau.

Selon la figure 5C, cette couche superficielle 26 est enlevée par morceaux selon une étape 180 de retrait de la couche superficielle, ici par un opérateur descendu dans la capacité au moyen d'une nacelle, pour ne pas endommager la peau intérieure de la capacité.

Au besoin, cette couche ultime aura été prédécoupée au moyen des rainures tracées sur le bloc de béton cellulaire avant bobinage à l'étape de la figure 3E.

Ainsi le mandrin de l'invention est simple à mettre en oeuvre et à retirer et un autre avantage du produit est que l'on peut, après une casse dans un bloc, le réparer avec un mélange de colle béton cellulaire et de poudre de béton cellulaire.

L'exemple choisi est la réalisation d'un mandrin pour un propulseur de 2.3 m de diamètre et 7 m de long.

L'axe central est réalisé en acier et muni à ses deux extrémités de pièces 14, 15 d'interface avec les embases avant et arrière du propulseur. L'axe est donc compatible avec différentes géométrie d'embase et utilisable pour tout type de propulseur dont la longueur est voisine de 7 m.

La fabrication de béton cellulaire étant un procédé délicat et nécessitant une longue mise au point, il a été décidé d'utiliser des blocs directement fabriqués par le producteur plutôt que de procéder à un moulage sur place.

Celui-ci produit des blocs de 2.5x1.5x0.5 m, qu'il taille ensuite à la dimension standard des blocs de construction.

Les blocs sont préalablement usinés en demi-galettes de diamètre 2.4m, de manière à être plus tard collées entre elles et sur l'axe central à l'aide d'une colle utilisée de manière standard pour le béton cellulaire. L'axe central est éventuellement muni de nervures pour faciliter la liaison axe / galette.

Les demi-galettes sont approchées de l'axe puis collées entre elles et sur l'axe, jusqu'à obtention d'une longueur suffisante. La longueur exacte est obtenue par usinage de la dernière couche de demi-galettes. L'embase supérieure est alors mise en place et le mandrin stocké à l'état d'ébauche.

La mise au gabarit de l'ébauche se fait sur un tour horizontal comme représenté à la figure 3D. La dernière opération avant mise en place des couches de protection thermiques en caoutchouc est la découpe des fentes permettant le démontage final.

Les opérations de bobinage se passent sans modification majeure par rapport au techniques connues.

A l'issue de celles-ci, la capacité bobinée est mise à la verticale et l'axe retiré.

Une fraiseuse 3D est alors introduite dans la capacité pour abrasion du béton cellulaire jusqu'à 3 cm environ de la protection thermique interne distance qui permet de retrouver le fond des rainures découpées à la surface du mandrin selon l'étape de la figure 3E.

La forme de ces rainures permet à un opérateur de facilement faire tomber les morceaux de béton restant et donc de dégager complètement la structure.

La dernière opération est un lavage interne de la capacité destiné à évacuer les dernières poussières et préparer la capacité aux opérations ultérieures

Pour mémoire, la masse d'un mandrin métallique actuel pour un propulseur de 2.3 m de diamètre et 7 m de long fait environ 18 T. Une fois le profil connu par exemple à 2 à 3 mm près, il faut environ 12 mois pour réaliser un tel mandrin métallique.

Un mandrin conventionnel en sable/résine aurait pesé plus de 60 T et demandé environ 8 mois de délai, essentiellement pour la fabrication du moule, une fois connu le profil à 5 mm près.

La masse du mandrin équivalent en béton cellulaire est de 14.5 T, qui se décompose en 9.5 T pour le béton cellulaire et environ 5 T pour l'axe en acier et les accessoires de montage des embases. Le profil n'a pas besoin d'être connu avec une précision supérieur à une centaine de mm, et donc la fabrication de l'ébauche peut se faire en parallèle avec la définition du profil de la capacité, une passe d'usinage final selon la figure 3D permettant de mettre le mandrin au gabarit du profil final.

Ainsi non seulement le mandrin en béton cellulaire permet de réduire les cycles de développement, mais il est compatible avec les évolutions ultérieur du profil et il est plus léger, caractéristique qui repousse les limites des machines à bobiner.

Comparé à un mandrin métallique, le mandrin en béton cellulaire n'est pas intégralement réutilisable. Cet inconvénient est en fait limité par le fait que seule la partie béton est à remplacer, l'axe et les accessoires étant récupérés. De plus, la durée et le coût des opérations de démontage et nettoyage du mandrin métallique sont du même ordre de grandeur que la reconstitution du béton cellulaire autour de l'axe, ce qui en relativise l'inconvénient.

Au delà de la fabrication des propulseurs à poudre, l'invention possède des applications dans le domaine de l'aéronautique, réalisation de fuselages composites, mais plus généralement tous les secteurs nécessitant la réalisation de capacités bobinées de grande taille, stockage de gaz, de liquides, ....

Il y a lieu de noter également que l'invention n'est pas limitée à l'exemple décrit ci-dessus, le béton cellulaire étant notamment utilisable pour des solutions mixtes métalliques démontables.

## Revendications

1. - Outillage de fabrication de capacités bobinées comportant un mandrin (10) de bobinage des fibres **caractérisé en ce que** le mandrin de type démontable ou éliminable après bobinage et polymérisation de la capacité est réalisé au moins partiellement au moyen d'un béton cellulaire.

2. - Outillage de fabrication de capacités bobinées selon la revendication 1 **caractérisé en ce que** le béton cellulaire est réalisé à partir d'un mélange comportant en volume:
- de 15 à 25 % de ciment (cpj32,5),
- de 10 à 20 % de chaux,
- de 0,01 à 0,09 % de poudre d'aluminium,
- de 0,5 à 1,5 % de gypse,
- de 60 à 70 % de sable de quartz siliceux, pour complément à 100%
le tout additionné respectant un total de 100%, la prise du béton étant réalisée par addition d'eau au mélange.

3. - Outillage de fabrication de capacités bobinées selon la revendication 1 ou 2 **caractérisé en ce que** le béton cellulaire solidifié présente une masse volumique inférieure à 500kg/m3.

4. - Outillage de fabrication de capacités bobinées selon la revendication 3 **caractérisé en ce que** le béton cellulaire solidifié présente une masse volumique de 400kg/m3+/-10%.

5. - Outillage de fabrication de capacités bobinées selon l'une quelconque des revendications précédentes **caractérisé en ce qu'**il est réalisé en plusieurs parties (10a, 10b, 10c, 10d) de mandrin assemblables,

6. - Outillage de fabrication de capacités bobinées selon la revendication 5 **caractérisé en ce que** les parties assemblables comportent des tronçons axiaux (10b) du mandrin.

7. - Outillage de fabrication de capacités bobinées selon la revendication 5 **caractérisé en ce que** les parties assemblables comportent des secteurs radiaux (10a, 10c, 10d).

8. - Outillage de fabrication de capacités bobinées selon l'une quelconque des revendications précédentes **caractérisé en ce qu'**il comporte un logement de réception d'un axe (11) de rotation du mandrin.

9. - Outillage de fabrication de capacités bobinées selon l'une quelconque des revendications 1 à 4 **caractérisé en ce qu'**il comporte un moulage (20) direct du béton autour d'un axe de rotation (11) du mandrin.

10. - Outillage de fabrication de capacités bobinées selon la revendication 8 ou 9 **caractérisé en ce que** l'axe (11) est un axe conique.

11. - Outillage de fabrication de capacités bobinées selon l'une quelconque des revendications précédentes **caractérisé en ce qu'**il comporte une surface externe striée.

12. - Outillage de fabrication de capacités bobinées selon l'une quelconque des revendications précédentes **caractérisé en ce qu'**il est recouvert d'une peau (19) de réception des fibres bobinées.

13. - Procédé de réalisation d'un outillage de fabrication de capacités bobinées selon l'une quelconque des revendications précédentes, **caractérisé en ce qu'**il comporte une étape de moulage d'un mandrin (10) ou de parties (10a, 10b, 10c, 10d) d'un mandrin pourvu d'un logement de réception d'un axe (11) de bobinage.

14. - Procédé de réalisation d'un outillage de fabrication de capacités bobinées selon la revendication 13 **caractérisé en ce qu'**il comporte, après l'étape de moulage, une étape (100) de fixation du mandrin ou d'assemblage et de fixation des éléments du mandrin sur l'axe de bobinage.

15. - Procédé de réalisation d'un outillage de fabrication de capacités bobinées selon la revendication 13 **caractérisé en ce que** l'étape (110) de moulage (20) du mandrin comporte une étape de moulage d'une ébauche du mandrin sur l'axe (11) de bobinage.

16. - Procédé de réalisation d'un outillage de fabrication de capacités bobinées selon la revendication 14 ou 15 **caractérisé en ce qu'**il comporte une étape (120) de mise au gabarit du mandrin sur l'axe de bobinage par usinage (17) de la surface externe du mandrin.

17. - Procédé de réalisation d'un outillage de fabrication dé capacités bobinées selon l'une quelconque des revendications 14 à 16 **caractérisé en ce qu'**il comporte une étape (130) d'usinage de rainures (29a) sur la surface externe du mandrin.

18. - Procédé de réalisation d'un outillage de fabrication de capacités bobinées l'une quelconque des revendications 14 à 17 **caractérisé en ce qu'**il comporte une étape (140) de dépose d'une peau (19) de protection thermique sur la surface externe du mandrin (10).

19. - Procédé de réalisation d'une capacité par bobinage sur un outillage selon l'une quelconque des revendications 1 à 12 **caractérisé en ce qu'**il comporte une étape (150) de bobinage de fibres (20) sur ledit mandrin disposé sur un axe (11) de bobinage, une étape (160) de retrait de l'axe de bobinage et une étape (170, 180) de retrait du mandrin.

20. - Procédé de réalisation d'une capacité par bobinage sur un mandrin selon la revendication 19 **caractérisé en ce que** l'étape de retrait du mandrin comporte une étape (170) d'abrasion ou grignotage du béton cellulaire constituant le mandrin.

21. - Procédé de réalisation d'une capacité par bobinage sur un mandrin selon la revendication 20 **caractérisé en ce que** l'étape (170) d'abrasion est limitée en sorte de laisser une couche superficielle de béton en contact avec l'intérieur de la capacité, l'étape de retrait du mandrin comportant une étape (180) de retrait de la couche superficielle.

## Patentansprüche

1. Ausrüstung zum Herstellen gewickelter Kapazitäten, die einen Faserwicklungsdorn (10) umfasst, **dadurch gekennzeichnet, dass** der Dorn, der von einem Typ ist, der nach der Wicklung und der Polymerisation der Kapazität demontierbar oder entfernbar ist, wenigstens teilweise aus Porenbeton verwirklicht ist.

2. Ausrüstung für die Herstellung gewickelter Kapazitäten nach Anspruch 1, **dadurch gekennzeichnet, dass** der Porenbeton anhand eines Gemisches verwirklicht ist, das dem Volumen nach Folgendes enthält:
- von 15 bis 25 % Zement (cpj32,5),
- von 10 bis 20 % Kalk,
- von 0,01 bis 0,09 % Aluminiumpulver,
- von 0,5 bis 1,5 % Gips,
- von 60 bis 70 % siliciumhaltiger Quarzsand zur Ergänzung auf 100 %,
wobei die Summe eine Gesamtsumme von 100 % berücksichtigt, wobei das Abbinden des Betons durch Hinzfügung von Wasser zu dem Gemisch erfolgt.

3. Ausrüstung für die Herstellung von gewickelten Kapazitäten nach Anspruch 1 oder 2, **dadurch gekennzeichnet, dass** der verfestigte Porenbeton eine Volumenmasse von weniger als 500 kg/m³ aufweist.

4. Ausrüstung für die Herstellung gewickelter Kapazitäten nach Anspruch 3, **dadurch gekennzeichnet, dass** der verfestigte Porenbeton eine Volumenmasse von 400 kg/m³ ± 10 % aufweist.

5. Ausrüstung für die Herstellung gewickelter Kapazitäten nach einem der vorhergehenden Ansprüche, **dadurch gekennzeichnet, dass** sie aus mehreren zusammenfügbaren Dornteilen (10a, 10b, 10c, 10d) verwirklicht ist.

6. Ausrüstung für die Herstellung gewickelter Kapazitäten nach Anspruch 5, **dadurch gekennzeichnet, dass** die zusammenfügbaren Teile axiale Teilstücke (10b) des Dorns enthalten.

7. Ausrüstung für die Herstellung gewickelter Kapazitäten nach Anspruch 5, **dadurch gekennzeichnet, dass** die zusammenfügbaren Teile radiale Sektoren (10a, 10c, 10d) umfassen.

8. Ausrüstung für die Herstellung gewickelter Kapazitäten nach einem der vorhergehenden Ansprüche, **dadurch gekennzeichnet, dass** sie einen Aufnahmeraum für die Aufnahme einer Drehachse (11) des Dorns umfasst.

9. Ausrüstung für die Herstellung gewickelter Kapazitäten nach einem der Ansprüche 1 bis 4, **dadurch gekennzeichnet, dass** sie eine direkte Abformung (20) von Beton um die Drehachse (11) des Dorns umfasst.

10. Ausrüstung für die Herstellung gewickelter Kapazitäten nach Anspruch 8 oder 9, **dadurch gekennzeichnet, dass** die Achse (11) eine konische Achse ist.

11. Ausrüstung für die Herstellung gewickelter Kapazitäten nach einem der vorhergehenden Ansprüche, **dadurch gekennzeichnet, dass** sie eine gerillte äußere Oberfläche aufweist.

12. Ausrüstung für die Herstellung gewickelter Kapazitäten nach einem der vorhergehenden Ansprüche, **dadurch gekennzeichnet, dass** sie mit einer Haut (19) für die Aufnahme gewickelter Fasern bedeckt ist.

13. Verfahren zur Verwirklichung einer Ausrüstung für die Herstellung gewickelter Kapazitäten nach einem der vorhergehenden Ansprüche, **dadurch gekennzeichnet, dass** es einen Schritt des Formens eines Dorns (10) oder von Teilen (10a, 10b, 10c, 10d) eines Dorns, der mit einem Aufnahmesitz für die Aufnahme einer Wicklungsachse (11) versehen ist, umfasst.

14. Verfahren zur Verwirklichung einer Ausrüstung für die Herstellung gewickelter Kapazitäten nach Anspruch 13, **dadurch gekennzeichnet, dass** es nach dem Schritt des Formens einen Schritt (100) des Befestigens des Dorns oder der Zusammenfügung und des Befestigens von Elementen des Dorns auf der Wicklungsachse umfasst.

15. Verfahren zur Verwirklichung einer Ausrüstung einer Herstellung gewickelter Kapazitäten nach Anspruch 13, **dadurch gekennzeichnet, dass** der Schritt (110) des Formens (20) des Dorns einen Schritt des Formens eines Rohlings des Dorns auf der Achse (11) der Wicklung umfasst.

16. Verfahren zur Verwirklichung einer Ausrüstung für die Herstellung gewickelter Kapazitäten nach Anspruch 14 oder 15, **dadurch gekennzeichnet, dass** es einen Schritt (120) des Bringens auf Maß des Dorns auf der Wicklungsachse durch Bearbeiten (17) der äußeren Oberfläche des Dorns umfasst.

17. Verfahren zur Verwirklichung einer Ausrüstung für die Herstellung gewickelter Kapazitäten nach einem der Ansprüche 14 bis 16, **dadurch gekennzeichnet, dass** es einen Schritt (130) des Bearbeitens von Rillen (29a) auf der äußeren Oberfläche des Dorns umfasst.

18. Verfahren zur Verwirklichung einer Ausrüstung für die Herstellung gewickelter Kapazitäten nach einem der Ansprüche 14 bis 17, **dadurch gekennzeichnet, dass** es einen Schritt (140) des Ablagerns einer Wärmeschutzhaut (19) auf der äußeren Oberfläche des Dorns (10) umfasst.

19. Verfahren zur Verwirklichung einer Kapazität durch Wickeln auf einer Ausrüstung nach einem der Ansprüche 1 bis 12, **dadurch gekennzeichnet, dass** es einen Schritt (150) des Wickelns von Fasern (20) auf den Dorn, der auf einer Wicklungsachse (11) angeordnet ist, einen Schritt (160) des Zurückziehens der Wicklungsachse und einen Schritt (170, 180) des Zurückziehens des Dorns umfasst.

20. Verfahren zur Verwirklichung einer Kapazität durch Wickeln auf einen Dorn nach Anspruch 19, **dadurch gekennzeichnet, dass** der Schritt des Zurückziehens des Dorns einen Schritt (170) des Abreibens oder Abnagens des Porenbetons, der den Dorn bildet, umfasst.

21. Verfahren zur Verwirklichung einer Kapazität durch Wicklung auf einen Dorn nach Anspruch 20, **dadurch gekennzeichnet, dass** der Schritt (170) des Abreibens in der Weise begrenzt ist, dass eine Oberflächenschicht aus Beton in Kontakt mit dem Innenraum der Kapazität erhalten bleibt, wobei der Schritt des Zurückziehens des Dorns einen Schritt (180) des Zurückziehens der Oberflächenschicht umfasst.

## Claims

1. Tooling for the manufacture of wound capacities, comprising a fibre-winding mandrel (10), **characterized in that** the mandrel, of the type that can be removed or eliminated after the capacity has been wound and polymerized, is made at least partially from a cellular concrete.

2. Tooling for the manufacture of wound capacities according to Claim 1, **characterized in that** the cellular concrete is made up of a mix containing by volume:
- from 15 to 25% cement (cpj32.5),
- from 10 to 20% lime,
- from 0.01 to 0.09% aluminium powder,
- from 0.5 to 1.5% gypsum,
- from 60 to 70% silica quartz sand, as complement to 100%
all of these added together conforming to a total of 100%, the concrete being made to set by adding water to the mix.

3. Tooling for the manufacture of wound capacities according to Claim 1 or 2, **characterized in that** the solidified cellular concrete has a mass per unit volume of less than 500 kg/m³.

4. Tooling for the manufacture of wound capacities according to Claim 3, **characterized in that** the solidified cellular concrete has a mass per unit volume of 400 kg/m³ +/- 10%.

5. Tooling for the manufacture of wound capacities according to any one of the preceding claims, **characterized in that** it is made up of several mandrel parts (10a, 10b, 10c, 10d) that can be assembled.

6. Tooling for the manufacture of wound capacities according to Claim 5, **characterized in that** the parts that can be assembled comprise axial portions (10b) of the mandrel.

7. Tooling for the manufacture of wound capacities according to Claim 5, **characterized in that** the parts that can be assembled comprise radial sectors (10a, 10c, 10d).

8. Tooling for the manufacture of wound capacities according to any one of the preceding claims, **characterized in that** it comprises a housing to accommodate an axle (11) for rotating the mandrel.

9. Tooling for the manufacture of wound capacities according to any one of Claims 1 to 4, **characterized in that** it comprises a direct moulding (20) of the concrete around a rotation axle (11) of the mandrel.

10. Tooling for the manufacture of wound capacities according to Claim 8 or 9, **characterized in that** the axle (11) is a tapering axle.

11. Tooling for the manufacture of wound capacities according to any one of the preceding claims, **characterized in that** it comprises a striated external surface.

12. Tooling for the manufacture of wound capacities according to any one of the preceding claims, **characterized in that** it is covered by a skin (19) for receiving the wound fibres.

13. Method for creating tooling for the manufacture of wound capacities according to any one of the preceding claims, **characterized in that** it comprises a step of moulding a mandrel (10) or parts (10a, 10b, 10c, 10d) of a mandrel which is provided with a housing to accept a winding axle (11).

14. Method for creating tooling for the manufacture of wound capacities according to Claim 13, **characterized in that** it comprises, after the moulding step, a step (100) of securing the mandrel or of assembling and securing the mandrel elements on the winding axle.

15. Method for creating tooling for the manufacture of wound capacities according to Claim 13, **characterized in that** the step (110) of moulding (20) the mandrel comprises a step of moulding a rough form of the mandrel on the winding axle (11).

16. Method for creating tooling for the manufacture of wound capacities according to Claim 14 or 15, **characterized in that** it comprises a step (120) of bringing the mandrel on the winding axle down to size by machining (17) the external surface of the mandrel.

17. Method for creating tooling for the manufacture of wound capacities according to any one of Claims 14 to 16, **characterized in that** it comprises a step (130) of machining grooves (29a) on the external surface of the mandrel.

18. Method for creating tooling for the manufacture of wound capacities according to any one of Claims 14 to 17, **characterized in that** it comprises a step (140) of applying a thermal protection skin (19) to the external surface of the mandrel (10).

19. Method for creating a capacity by winding on tooling according to any one of Claims 1 to 12, **characterized in that** it comprises a step (150) of winding fibres (20) onto the said mandrel arranged on a winding axle (11), a step (160) of removing the winding axle and a step (170, 180) of removing the mandrel.

20. Method for creating a capacity by winding on a mandrel according to Claim 19, **characterized in that** the step of removing the mandrel comprises a step (170) of abrading or nibbling the cellular concrete of which the mandrel is made.

21. Method for creating a capacity by winding on a mandrel according to Claim 20, **characterized in that** the abrading step (170) is limited in such a way as to leave a surface layer of concrete in contact with the inside of the capacity, the step of removing the mandrel involving a step (180) of removing the surface layer.
